# FASCICULE DE BREVET EUROPEEN

(11) **EP 2 721 260 B1**
(45) Date de publication et mention de la délivrance du brevet: **28.02.2018**
(21) Numéro de dépôt: 12738507.8
(22) Date de dépôt: 19.06.2012
(51) Int. Cl.: F01D 21/04, F01D 25/16, F02K 3/06

(54) **TURBOMOTEUR À DOUBLE FLUX À DISPOSITIF DE DÉCOUPLAGE**
KOPPLUNGSEINRICHTUNG FÜR DOPPELSTROMTURBINENTRIEBWERK
COUPLING ARRANGEMENT FOR A TURBOFAN ENGINE

(30) Priorité: 20.06.2011 FR 1155414
(43) Date de publication de la demande: 23.04.2014
(73) Titulaire: Safran Aircraft Engines, 75015 Paris (FR)
(72) Inventeur: SERVANT, Régis, Eugène, Henri, F-77550 Moissy-Cramayel (FR)
(74) Mandataire: Gevers & Orès
(86) Numéro de dépôt international: PCT/FR2012/051383
(87) Numéro de publication internationale: WO 2012/175864

(56) Documents cités:
- EP-A1- 1 308 602
- EP-A1- 1 403 468
- EP-A1- 1 653 051
- EP-A1- 2 071 138

## Description

La présente invention concerne les turbomoteurs à double flux.

On sait que les turbomoteurs à double flux comprennent un élément structural fixe (stator), appelé carter intermédiaire, comprenant un moyeu supportant les arbres supportant les différents rotors (soufflante, compresseur, etc.), un carter annulaire extérieur séparant le flux primaire (chaud) du flux secondaire (froid), ainsi qu'une pluralité de bras de liaison radiaux entre le moyeu et le carter annulaire extérieur.

L'arbre de soufflante et cet élément structural sont reliés l'un à l'autre par l'intermédiaire d'un palier amont et un palier aval.

Dès lors, si une aube de la soufflante se rompt, un balourd important apparaît sur l'arbre de soufflante, ce qui génère des charges cycliques et des vibrations que le palier amont communique à l'élément structural, avec des risques de détériorations non négligeables.

Afin de limiter les efforts transmis à la structure fixe de l'avion lors d'une telle perte d'aube, il est connu du document FR 2 831 624, de la société SNECMA, un dispositif de découplage pour turbomoteur à double flux comprenant une soufflante montée rotative sur un arbre de soufflante et un élément structural fixe, ledit arbre de soufflante et ledit élément structural étant reliés l'un à l'autre au niveau d'un palier amont et d'un palier aval, par l'intermédiaire respectivement d'un support de palier amont et d'un support de palier aval, ledit dispositif de couplage entourant ledit arbre de soufflante et comprenant :
- un ensemble de vis de fixation joignant le support de palier aval audit élément structural suivant une liaison fixe, et
- un ensemble de vis fusibles joignant le support de palier amont audit support de palier aval suivant une liaison apte à être rompue.

Ces vis dites « fusibles », dont le fonctionnement est amplement décrit dans le document précité, présentent une portion de section réduite susceptible de se rompre au-delà d'un effort mécanique de traction prédéterminé et ainsi de réaliser le découplage du support de palier amont et du support de palier aval.

Ainsi, deux couronnes de vis (une couronne de vis de fixation et une couronne de vis fusibles en traction) sont formées, celles-ci étant empilées radialement autour de l'arbre de soufflante. Il s'ensuit que, dès la présence d'un balourd (dû par exemple à la rupture d'une aube de soufflante), la rupture des vis fusibles en traction entraîne un découplage du support de palier amont, vis-à-vis de l'élément structural (par l'intermédiaire du support de palier aval auquel il est fixé), au bout d'un nombre restreint de tours de rotation de l'arbre de soufflante.

Dans cette configuration toutefois, lorsque les vis fusibles en traction se rompent, l'extrémité avant de la ligne d'arbre de compresseur basse pression n'est plus reliée à la structure et elle se met à orbiter autour de son nouveau centre de gravité. Ceci entraîne une flexion de l'arbre de turbine basse pression qui la rend susceptible de frotter sur la ligne d'arbre de compresseur haute pression qui lui est coaxiale, et qui tourne à une vitesse nettement supérieure, entraînant une probabilité non négligeable de dommages pour les deux lignes d'arbre du moteur.

Afin de pallier ce problème, le document FR 2 831 624 précité propose de disposer un deuxième dispositif de découplage entre le palier aval et l'élément structural fixe, ce deuxième dispositif comprenant un ensemble de vis fusibles en cisaillement. Dès lors, le jeu supplémentaire libéré au niveau du palier aval permet de limiter - voire d'éviter - le frottement entre les arbres de turbine basse pression et compresseur haute pression.

Toutefois, sur certains types de turbomoteur, la poussée axiale du turbomoteur peut être importante, ce qui nécessite d'installer un palier de butée de grande dimension. Ce fort encombrement impose généralement d'installer ce palier de butée en position aval.

Dès lors, l'encombrement radial engendré par le palier de butée, entre l'élément structural et l'arbre de soufflante, limite de façon significative l'espace disponible pour le premier dispositif de découplage mentionné ci-dessus, ce qui empêche en outre de faire convenablement passer les circuits de lubrification dans cette zone, ainsi que d'installer dans le support de palier aval les ouvertures nécessaires à la bonne ventilation de cette zone.

De surcroît, la configuration décrite ci-dessus des vis fusibles nécessite d'étanchéifier lesdites vis, ce qui implique l'ajout d'un couvercle spécifiquement dédié et participe donc à l'augmentation de l'encombrement.

On connaît également, par les documents EP2071138, EP1403468 et EP1308602 au nom du demandeur, des turbomoteurs avec dispositif de découplage.

Un objet de la présente invention est donc de réduire l'encombrement du dispositif de couplage amovible du document FR 2 831 624, afin qu'un espace disponible plus important puisse être alloué, entre l'élément structural et l'arbre de soufflante, à l'installation des canalisations et des ventilations nécessaires au bon fonctionnement du turbomoteur.

A cette fin, selon la présente invention et conformément à la revendication 1, le turbomoteur à dispositif de découplage tel que défini ci-dessus, est remarquable par le fait que les vis fusibles du dispositif sont intercalées entre les vis de fixation sur une même circonférence qui entoure l'arbre de soufflante.

Ainsi, grâce à la présente invention, les deux couronnes de vis (vis de fixation et vis cassables en traction) étant installées au niveau d'un diamètre d'implantation identique, l'empilage radial desdites couronnes de vis devient un empilage axial, ce qui permet de réduire de façon significative l'encombrement radial induit par le dispositif découplage selon l'invention, et donc d'augmenter l'espace disponible pour les canalisations et ventilations.

En outre, grâce à l'invention, les vis de fixation et les vis fusibles en traction étant intercalées sur une même bride, un couvercle d'étanchéité et son joint ne sont plus nécessaires afin d'étanchéifier lesdites vis fusibles, ce qui permet ainsi de diminuer l'épaisseur de la bride de l'élément structural et donc d'augmenter un peu plus l'espace disponible pour les canalisations et ventilations.

On notera par ailleurs que cette nouvelle configuration des couronnes de vis n'a aucun impact sur la séquence de montage du dispositif de découplage. De plus, l'invention permet de préserver, lorsque le dispositif de découplage selon l'invention est monté sur le turbomoteur, l'inaccessibilité de la liaison apte à être rompue entre l'arbre de soufflante et l'élément structural fixe.

De plus, grâce encore à l'invention, il est désormais possible de disposer les vis fusibles en traction à l'extérieur de la zone entre l'arbre de soufflante et l'élément structural, ce qui permet de protéger les éléments tournants, dans la mesure où aucun débris (notamment les têtes de vis rompues et les rondelles) ne se trouve pas dans cette zone après rupture, les filetages et le reste des vis fusibles pouvant en outre être piégés dans les cavités de l'élément structural. Toutes les vis fusibles du dispositif de découplage sont intercalées entre les vis de fixation.

Selon une forme particulière de réalisation, afin de limiter au maximum l'encombrement induit par le dispositif de découplage selon l'invention, au moins l'une des vis fusibles est intercalée entre deux vis de fixation.

Selon une autre forme particulière de réalisation, au moins l'une des vis fusible est intercalée entre deux n-uplets de vis de fixation. Dans ce cas, une vis fusible peut par exemple être intercalée entre deux paires de vis de fixation.

Dès lors, toutes les vis de fixation et toutes les vis fusibles peuvent être avantageusement réparties sur une unique circonférence entourant l'arbre de soufflante.

De préférence, également, sur la circonférence mentionnée ci-dessus, entourant ledit arbre de soufflante, les vis de fixation et les vis fusibles sont agencées de façon alternée, ce qui favorise une symétrie et un équilibre dans la couronne de vis, chaque vis fusible étant intercalée entre deux vis de fixation ou deux n-uplets de vis de fixation.

Selon une forme particulière de réalisation, le palier aval est un palier de butée, qui est soumis à la poussée axiale du turbomoteur. Ce palier aval permet aussi de limiter (ou éviter) le frottement entre les arbres basse pression et haute pression après découplage.

Afin de tenir compte de l'espace nécessaire pour les moyens de canalisation et de ventilation de la veine primaire, le support de palier aval présente une dimension adaptée au logement de moyens de canalisation et de ventilation.

Afin de permettre l'installation des vis de fixation du dispositif, le support de palier amont présente, au niveau d'au moins une vis de fixation, un orifice pour le passage d'un outil de serrage de ladite vis.

Selon une autre caractéristique de l'invention, au moins une vis fusible peut présenter une tête de vis dont la forme est adaptée pour éviter toute intervention extérieure, afin de protéger le serrage de ladite vis et donc le tarage du dispositif de découplage.

Par ailleurs, au moins l'une des vis fusibles en traction peut être disposée en appui sur le support de palier amont par l'intermédiaire d'une rondelle. De plus, le filetage d'au moins l'une des vis fusibles peut être serré par un écrou logé dans une cavité ménagée à l'intérieur de l'élément structural.

A l'intérieur d'au moins une cavité du support de palier aval peut être inséré un mécanisme anti-rotation de la vis fusible correspondante.

Avantageusement, un lamage est ménagé dans le support de palier aval, de sorte qu'au moins une partie d'une vis de fixation puisse être encastrée dans ledit lamage, ce qui permet de protéger la partie correspondante d'une vis de fixation après rupture des vis fusibles, lors d'une perte d'aube.

Les figures du dessin annexé feront bien comprendre comment l'invention peut être réalisée. Sur ces figures, des références identiques désignent des éléments techniques semblables.
La figure 1 est une demi-coupe radiale de la zone entre l'arbre de soufflante et l'élément structural fixe d'un turbomoteur à double flux équipé d'un dispositif de découplage selon l'invention.
La figure 2 est une vue du dispositif de découplage selon une première forme de réalisation de l'invention, dans un plan de coupe radial comprenant une vis de fixation.
La figure 3 est une vue du dispositif de couplage amovible de la figure 2, dans un plan de coupe radial comprenant une vis fusible en traction.
Les figures 4A, 4B et 4C sont respectivement des vues partielles en perspective d'une portion de couronne de vis formant le dispositif de découplage des figures 2 et 3, dans des plans de coupe axiale successifs.
La figure 5 est une vue de dessus d'un dispositif de découplage selon une deuxième forme de réalisation de l'invention.

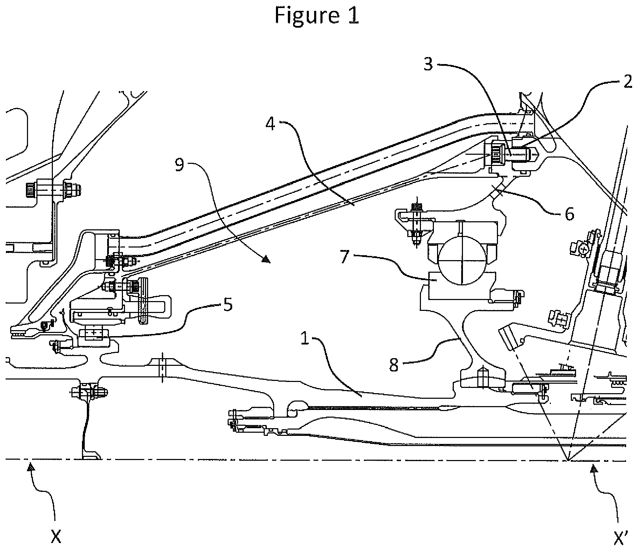

La partie du turbomoteur à double flux représentée sur la figure 1 correspond à une portion d'arbre de soufflante 1 (rotor), apte à tourner autour de l'axe X-X' du moteur, et une portion d'élément structural 2 (stator), par exemple le moyeu du carter intermédiaire. Cet arbre 1 porte, dans sa partie amont (dans le sens de l'écoulement des gaz), une soufflante munie d'aubes (non représentées) qui s'étendent devant l'entrée de la veine interne (ou primaire) d'écoulement des gaz et de la veine externe (ou secondaire) entourant celle-ci, qu'emprunte l'air de dilution.

L'arbre de soufflante 1 et l'élément structural 2 sont reliés l'un à l'autre au niveau d'un palier amont 5 et d'un palier aval 7, par l'intermédiaire respectivement d'un support de palier amont 4 et d'un support de palier aval 6, tous disposés en aval de la soufflante.

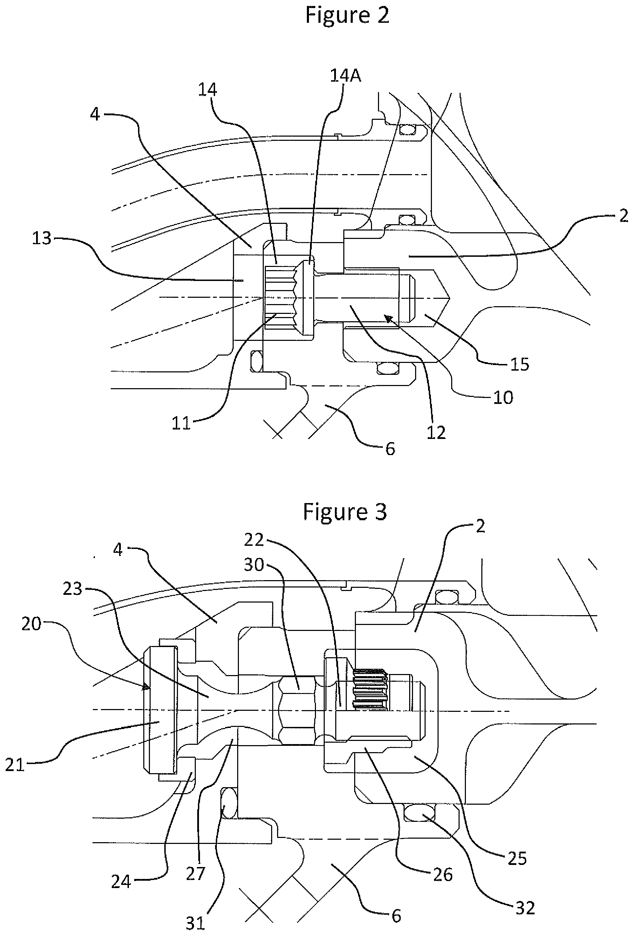

Un dispositif de découplage 3 est par ailleurs agencé de façon à coupler, d'une part, l'élément structural 2, et, d'autre part, le support de palier amont 4 et le support de palier aval 6. A cette fin, le dispositif de découplage 3, qui entoure l'arbre de soufflante 1 de façon concentrique, comprend tout d'abord un ensemble de vis de fixation 10 (figure 2) joignant le support de palier aval 6 à l'élément structural 2 suivant une liaison fixe. De façon semblable, le dispositif de découplage 3 comprend également un ensemble de vis fusibles 20 (figure 3), par exemple en traction, joignant le support de palier amont 4 au support de palier aval 6, suivant une liaison apte à être rompue.

Le palier aval 7 est par ailleurs relié à l'arbre de soufflante 1 par l'intermédiaire d'un support de palier aval additionnel 8.

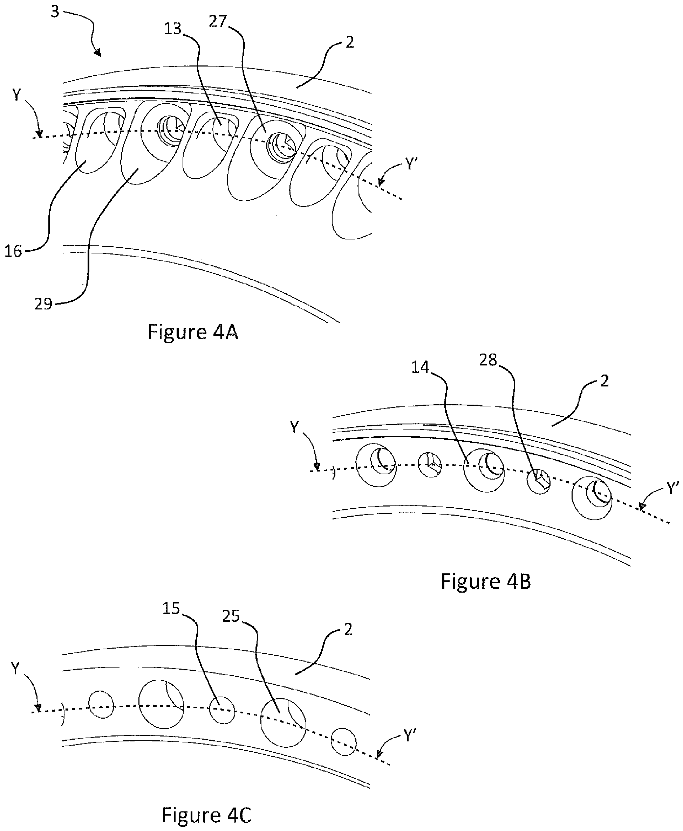

Le dispositif de découplage 3 est représenté plus en détails sur les figures 2 et 3. Celui-ci est composé des ensembles de vis de fixation 10 (figure 2) et de vis fusibles 20 (figure 3) précités, ces vis étant réparties sur une couronne (dont une partie est visible sur les figures 4A, 4B et 4C) entourant l'arbre de soufflante 1, par révolution autour de l'axe longitudinal X-X' du turbomoteur.

Les vis de fixation 10, du type de celle représentée sur la figure 2, sont destinées à maintenir le support de palier aval 6 contre l'élément structural 2. A cette fin, chaque vis 10 est composée d'une tête de vis 11 et d'un filetage 12. Un orifice 13 est pratiqué dans le support de palier amont 4, auquel la vis 10 n'est pas destinée à être fixée, afin de permette le passage d'un outil de serrage de ladite vis 10. Un lamage 14 est également ménagé dans le support de palier aval 6, de sorte que la tête de vis 11 puisse être encastrée dans ce lamage 14, jusqu'à une butée 14A, ce qui permet de protéger ladite tête 11 après rupture des vis fusibles 20, lors d'une perte d'aube. Par ailleurs, une cavité taraudée 15 est ménagée dans l'élément structural 2 afin d'y visser le filetage 12.

Les vis fusibles 20, du type de celle représentée sur la figure 3, sont destinées à maintenir le support de palier amont 4 contre le support de palier aval 6, tant qu'aucun balourd - engendré par une perte d'aube de soufflante - n'est apparu au niveau de la soufflante. A cette fin, chaque vis 20 est composée d'une tête de vis 21 et d'un filetage 22. Le caractère fusible de la vis 20 se manifeste par une portion lisse de section réduite 23, disposée entre la tête 21 et le filetage 22, de manière à servir d'amorce de rupture en traction (la vis fusible de la figure 3 est ainsi une vis fusible en traction).

Ainsi, si l'une des aubes de soufflante se détache de la soufflante, l'effort radial cyclique transmis à l'arbre de soufflante 1 et au palier amont 5 est converti en effort axial cyclique sur chaque vis fusible 20, les vis 20 étant alors rompues par traction au niveau de leurs portions à section réduite 23 quand cet effort deviendra suffisant. Les vis fusibles 20, agencées autour de la circonférence précitée, seront normalement rompues les unes après les autres en une seule révolution de l'arbre de soufflante 1, d'autant plus facilement que la résistance mécanique d'ensemble décroîtra sans cesse à mesure des ruptures déjà produites. Le support de palier amont 4 sera alors détaché du support de palier aval 6 et ne transmettra donc plus d'effort vers l'élément structural 2.

On notera que, dans une telle situation de rupture du support de palier amont 4, le palier amont 5 ne permet plus de soutenir la soufflante. L'arbre de soufflante 1 n'est alors plus soutenu que par le palier aval 7, qui se met à transmettre à son tour les efforts cycliques. Afin de contrôler ces efforts, des vis fusibles en cisaillement peuvent être disposées entre l'élément structural 2 et le palier aval 7. Toutefois, lorsque ces efforts deviennent trop importants, un palier aval 7 sous forme de palier de butée (si possible de grande dimension), tel que représenté sur la figure 1, est privilégié, ce qui rend inutile l'utilisation de vis fusibles en cisaillement, voire même néfaste du fait du faible espace disponible au niveau de la zone 9 (visible sur la figure 1) séparant l'arbre de soufflante 1 et l'élément structural fixe 2.

La tête de vis 21, dont la forme est adaptée pour éviter toute intervention extérieure, est en appui contre le support de palier amont 4 par l'intermédiaire d'une rondelle 24. Par ailleurs, le filetage 22 de la vis fusible 20 est serré par un écrou 26 non accessible sur moteur car monté à l'intérieur d'une cavité 25 ménagée dans l'élément structural 2. Ceci complète la protection du couple de serrage de la vis fusible qui influe directement sur l'effort de rupture de la vis. De plus, un dispositif anti-rotation 28 de la vis cassable 20 est inséré à l'intérieur du trou de passage dans la bride du support de palier aval 6. Avantageusement, ce dispositif anti-rotation est réalisé par un orifice hexagonal 28, immobilisant en rotation le secteur hexagonal 30 de la vis fusible 20.

Conformément à la présente invention, les vis de fixation 10 et les vis fusibles 20 sont réparties sur une même et unique circonférence Y-Y' qui entoure l'arbre de soufflante 1 (figures 4A à 4C). Plus précisément, ces vis 10 et 20 sont installées de façon alternée, une vis de fixation 10 (ou un n-uplet de vis de fixation 10) étant intercalée entre deux vis fusibles 20. Cette disposition est illustrée sur les figures 4A, 4B et 4C, suivant différents plans de coupe radiaux.

Sur la figure 4A, on voit la bride du support de palier amont 4 assemblée sur le support de palier aval 6 et l'élément structural 2, vue de l'amont. La bride de l'élément structural 2 - au niveau de laquelle est positionné le dispositif de découplage 3 selon l'invention - est munie d'une pluralité d'orifices, par lesquels passent les vis de fixation 10 et les vis fusibles 20. Les orifices correspondant aux vis 10 et 20 sont répartis de façon équidistante et alternée sur la circonférence Y-Y'.

De plus, dans ce même plan, l'orifice pour la vis de fixation 10 comprend l'orifice 13 prévu pour le passage d'un outil de serrage de ladite vis, tandis que l'orifice pour la vis cassable 20 comprend un orifice de passage 27 (voir aussi figure 3).

Sur la figure 4B, on voit la bride du support de palier aval 6 assemblée sur la bride de l'élément structural 2, vue de l'amont. L'orifice pour la vis de fixation 10 comprend le lamage 14 précité permettant l'encastrement de ladite vis 10, tandis que l'orifice pour la vis fusible 20 comprend un mécanisme anti-rotation 28 (non visible sur la figure 3), de section hexagonale.

Sur la figure 4C, on voit la bride de l'élément structural 2 seule, vue de l'amont. L'orifice pour la vis de fixation 10 comprend la cavité taraudée 15 - ou douille - pour le vissage du filetage 12, tandis que vis-à-vis de la vis fusible 20 se trouve une cavité 25 dans la bride de l'élément structural 2, destinée à rendre inaccessible l'écrou 26 serré sur le filetage 22 de ladite vis 20, et qui participe également à l'étanchéité au droit de la vis fusible.

Ainsi, l'assemblage des vis de fixation 10 et des vis fusibles 20, dans le dispositif de découplage 3 selon l'invention, engendre un encombrement minimal, ce qui permet de laisser libre un espace suffisamment grand pour le logement des moyens de canalisation et de ventilation nécessaires au bon fonctionnement du turbomoteur, au travers du support de palier aval 6.

En outre, la cavité 25 réalisée dans l'élément structural 2 permet également d'assurer l'étanchéité au droit de la vis fusible 20, ce qui évite de recourir à un couvercle spécifiquement dédié à cette étanchéité. Cette étanchéité est réalisée par deux joints toriques 31 et 32, respectivement situé entre les supports de palier 4 et 6, et entre le support de palier aval 6 et l'élément structural 2.

Bien que la portion de moteur représentée sur la figure 1 correspond à une vue dans un plan de coupe radial, on comprendra que la configuration présentée ci-dessus est pratiquée sur toute la circonférence du turbomoteur, de sorte que les éléments décrits ci-dessus entourent l'arbre de soufflante 1, autour de l'axe X-X' du moteur.

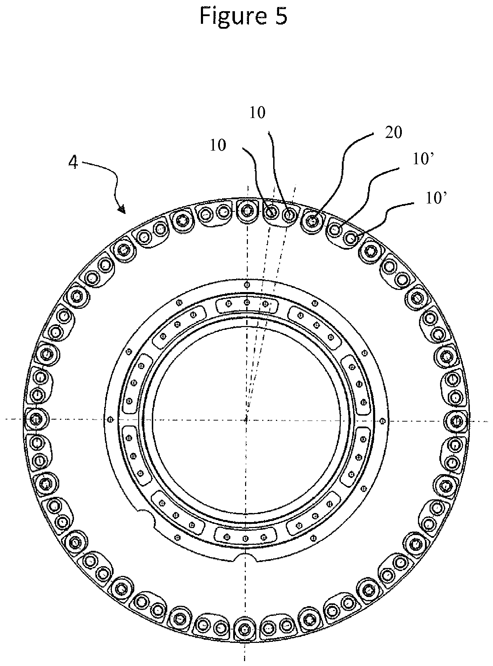

On notera que, dans certains cas, il peut être nécessaire d'adapter le nombre de vis de fixation et le nombre de vis fusibles suivant les efforts auxquels chaque couronne de vis doit être soumis. Aussi, il peut être judicieux que le nombre de vis de fixation ne soit pas égal au nombre de vis fusibles. Dans ce cas, une vis fusible peut être intercalée entre deux n-uplets de vis de fixation, comme cela est illustré sur la figure 5, où une vis fusible 20 est intercalée entre deux paires de vis de fixation 10 et 10' et où le dispositif de découplage comporte ainsi deux fois plus de vis de fixation 10 et 10' que de vis fusibles 20.

## Revendications

1. Turbomoteur à double flux comprenant une soufflante montée rotative sur un arbre de soufflante (1) et un élément structural fixe (2), ledit arbre de soufflante (1) et ledit élément structural (2) étant reliés l'un à l'autre au niveau d'un palier amont (5) et d'un palier aval (7), par l'intermédiaire respectivement d'un support de palier amont (4) et d'un support de palier aval (6), et un dispositif de découplage (3) entourant ledit arbre de soufflante (1) et comprenant :
- un ensemble de vis de fixation (10) joignant le support de palier aval (6) audit élément structural (2) suivant une liaison fixe, et
- un ensemble de vis fusibles (20) joignant le support de palier amont (4) audit support de palier aval (6) suivant une liaison apte à être rompue,
**caractérisé en ce que** lesdites vis fusibles (20) du dispositif sont intercalées entre lesdites vis de fixation (10) sur une même circonférence qui entoure l'arbre de soufflante.

2. Turbomoteur selon la revendication 1, dans lequel au moins l'une des vis fusibles (20) est intercalée entre deux vis de fixation (10).

3. Turbomoteur selon la revendication 2 dans lequel au moins l'une des vis fusibles (20) est intercalée entre deux n-uplets de vis de fixation (10).

4. Turbomoteur selon l'une des revendications précédentes, dans lequel toutes les vis de fixation (10) et toutes les vis fusibles (20) du dispositif de découplage sont réparties sur une unique circonférence (Y-Y') entourant l'arbre de soufflante (1).

5. Turbomoteur selon l'une des revendications précédentes, dans lequel le support de palier aval (6) est traversé par des moyens de canalisation et de ventilation, avec une dimension telle à loger ces derniers.

6. Turbomoteur selon l'une des revendications précédentes, dans lequel le support de palier amont (4) présente, au niveau d'au moins une vis de fixation (10), un orifice (13) pour le passage d'un outil de serrage de ladite vis.

7. Turbomoteur selon l'une des revendications précédentes, dans lequel au moins l'une des vis fusibles (20) présente une tête de vis (21) dont la forme est adaptée pour éviter toute intervention extérieure.

8. Turbomoteur selon l'une des revendications précédentes, dans lequel un lamage (14) est ménagé dans le support de palier aval (6), de manière qu'au moins une partie d'une vis de fixation (10) puisse être encastrée dans ledit lamage (14).

## Patentansprüche

1. Turbomotor mit doppeltem Strom, umfassend ein Gebläse, das drehend auf eine Gebläsewelle (1) und ein fixes strukturelles Element (2) montiert ist, wobei die Gebläsewelle (1) und das strukturelle Element (2) miteinander auf dem Niveau eines vorgelagerten Lagers (5) und eines nachgelagerten Lagers (7) mit Hilfe jeweils eines vorgelagerten Lagerträgers (4) und eines nachgelagerten Lagerträgers (6) verbunden sind, und eine Entkopplungsvorrichtung (3), die die Gebläsewelle (1) umgibt, und umfassend:
- eine Einheit von Fixierungsschrauben (10), die den nachgelagerten Lagerträger (6) mit dem strukturellen Element (2) gemäß einer fixen Anbindung zusammenfügt, und
- eine Einheit von Schmelzsicherungsschrauben (20), die den vorgelagerten Lagerträger (4) mit den nachgelagerten Lagerträger (6) gemäß einer Anbindung zusammenfügen, die gebrochen werden kann,
**dadurch gekennzeichnet, dass** die Schmelzsicherungsschrauben (20) der Vorrichtung zwischen den Fixierungsschrauben (10) auf einem gleichen Umfang eingefügt sind, der die Gebläsewelle umgibt.

2. Turbomotor nach Anspruch 1, wobei mindestens eine der Schmelzsicherungsschrauben (20) zwischen zwei Fixierungsschrauben (10) eingefügt ist.

3. Turbomotor nach Anspruch 2, wobei mindestens eine der Schmelzsicherungsschrauben (20) zwischen zwei Fixierungsschrauben-N-Tupels (10) eingefügt ist.

4. Turbomotor nach einem der vorstehenden Ansprüche, wobei alle Fixierungsschrauben (10) und alle Schmelzsicherungsschrauben (20) der Entkopplungsvorrichtung auf einem einzigen Umfang (Y - Y') verteilt sind, der die Gebläsewelle (1) umgibt.

5. Turbomotor nach einem der vorstehenden Ansprüche, wobei der vorgelagerte Lagerträger (6) von Kanalisierungs- und Ventilationsmitteln mit einer derartigen Abmessung durchquert ist, dass diese Letzteren aufgenommen werden.

6. Turbomotor nach einem der vorstehenden Ansprüche, wobei der vorgelagerte Lagerträger (4) auf dem Niveau von mindestens einer Fixierungsschraube (10) eine Öffnung (13) für den Durchgang eines Werkzeugs zum Anziehen der Schraube aufweist.

7. Turbomotor nach einem der vorstehenden Ansprüche, wobei mindestens eine der Schmelzsicherungsschrauben (20) einen Schraubenkopf (21) aufweist, dessen Form ausgelegt ist, um jeden äußeren Eingriff zu vermeiden.

8. Turbomotor nach einem der vorstehenden Ansprüche, wobei eine Senkung (14) im vorgelagerten Lagerträger (6) eingearbeitet ist, so dass mindestens ein Teil einer Fixierungsschraube (10) in die Senkung (14) eingelassen werden kann.

## Claims

1. A dual-flow turbine engine including a fan which is rotatably mounted on a fan shaft (1) and a fixed structural element (2), said fan shaft (1) and said structural element (2) being connected to one another at an upstream bearing (5) and a downstream bearing (7), respectively by means of an upstream bearing support (4) and a downstream bearing support (6), and a decoupling device (3) which surrounds said fan shaft (1) and includes:
- a set of fixing screws (10) which join the downstream bearing support (6) to said structural element (2) using a fixed connection, and
- a set of rupture screws (20) which join the upstream bearing support (4) to said downstream bearing support (6) using a rupturable connection,
**characterized in that** the said rupture screws (20) of the device are inserted between the said fixing screws (10) over a same circumference which surrounds the fan shaft.

2. The turbine engine as claimed in claim 1, in which at least one of the rupture screws (20) is inserted between two fixing screws (10).

3. The turbine engine as claimed in claim 2, in which at least one of the rupture screws (20) is inserted between two n-tuples of fixing screws (10) .

4. The turbine engine as claimed in one of the preceding claims, in which all the fixing screws (10) and all the rupture screws (20) of the decoupling device are distributed over a single circumference (Y-Y') which surrounds the fan shaft (1) .

5. The turbine engine as claimed in one of the preceding claims, in which the downstream bearing support (6) is traversed by ducting and ventilating means, with a dimension such as to accommodate these latter.

6. The turbine engine as claimed in one of the preceding claims, in which the upstream bearing support (4), in the area of at least one fixing screw (10), has an orifice (13) for the passage of a tightening tool for said screw.

7. The turbine engine as claimed in one of the preceding claims, in which at least one of the rupture screws (20) has a screw head (21) the form of which is adapted to avoid any outside interference.

8. The turbine engine as claimed in one of the preceding claims, in which a counter bore (14) is arranged in the downstream bearing support (6) such that at least part of a fixing screw (10) may be embedded into said counter bore (14).
